(19) **Europäisches Patentamt European Patent Office Office européen des brevets**

(11) **EP 4 576 549 A1**

(12) **EUROPÄISCHE PATENTANMELDUNG**

(43) Veröffentlichungstag:
25.06.2025 Patentblatt 2025/26

(21) Anmeldenummer: 23218774.0

(22) Anmeldetag: **20.12.2023**

(51) Internationale Patentklassifikation (IPC):
*H02M 7/483* (2007.01) *H02M 1/00* (2006.01)
*H05B 7/148* (2006.01) *F27B 3/08* (2006.01)

(52) Gemeinsame Patentklassifikation (CPC):
**H02M 7/483; F27B 3/085; H02M 1/0012; H02M 1/0019; H05B 7/148**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**KH MA MD TN**

(71) Anmelder: **Primetals Technologies Germany GmbH**
**91058 Erlangen (DE)**

(72) Erfinder:
• **Dinkel, Daniel**
**91058 Erlangen (DE)**
• **Weinzierl, Klaus**
**90480 Nürnberg (DE)**

(74) Vertreter: **Metals@Linz**
**Primetals Technologies Austria GmbH**
**Intellectual Property Upstream IP UP**
**Turmstraße 44**
**4031 Linz (AT)**

(54) **FLICKERFREIE REGELUNG EINES LICHTBOGENOFENS MITTELS EINES MULTILEVELKONVERTERS**

(57) Elektroden (1) eines Drehstrom-Lichtbogenofens (2) werden von einem Multilevelkonverter (4) über einen Ofentransformator (3) aus einem Versorgungsnetz (5) mit mehreren eingangsseitigen Phasen (6) mit elektrischer Energie versorgt. Eine zugehörige Steuereinrichtung (15) nimmt Messwerte für ausgangsseitige Phasenströme (11, I2, I3) entgegen, die ausgangsseitig des Multilevelkonverters (4) fließen. Weiterhin wird der Steuereinrichtung (15) für einen jeweils aktuellen Zeitpunkt eine momentane ausgangsseitige Sollleistung (P*) bekannt. Die Steuereinrichtung (15) ermittelt anhand der ausgangsseitigen Phasenströme (I1, I2, I3) und der ausgangsseitigen Sollleistung (P*) für den jeweils aktuellen Zeitpunkt ausgangsseitige Soll-Phasenspannungen (U1*, U2*, U3*), so dass die Summe der Produkte der ausgangsseitigen Soll-Phasenspannungen (U1*, U2*, U3*) und anhand der ausgangsseitigen Phasenströme (I1, I2, I3) ermittelter Sollwerte (I1*, I2*, I3*) für die ausgangsseitigen Phasenströme (I1, I2, I3) gleich der momentanen ausgangsseitigen Sollleistung (P*) ist. Die Steuereinrichtung (15) steuert den Multilevelkonverter (4) derart an, dass der Multilevelkonverter (4) mit den ausgangsseitigen Soll-Phasenspannungen (U1*, U2*, U3*) korrespondierende ausgangsseitige Phasenspannungen bereitstellt. Die Steuereinrichtung führt diese Schritte mit einer Zykluszeit (TZ) immer wieder aus.

FIG 1

**Beschreibung**

Gebiet der Technik

Die vorliegende Erfindung geht aus von einem Steuerverfahren für einen Multilevelkonverter, der Elektroden eines Drehstrom-Lichtbogenofens über einen Ofentransformator aus einem Versorgungsnetz mit mehreren eingangsseitigen Phasen mit elektrischer Energie versorgt, wobei eine Steuereinrichtung des Multilevelkonverters Messwerte für ausgangsseitige Phasenströme entgegennimmt, die ausgangsseitig des Multilevelkonverters fließen.

Der Multilevelkonverter ist also zwischen dem Versorgungsnetz und dem Ofentransformator angeordnet, der Ofentransformator zwischen dem Multilevelkonverter und den Elektroden. Die elektrische Energie fließt somit vom Versorgungsnetz zum Multilevelkonverter, von dort weiter zum Ofentransformator und von dort schließlich zu den Elektroden. Dadurch bilden sich zwischen den Elektroden und dem Schrott bzw. dem geschmolzenen Metall Lichtbögen aus, in denen die elektrische Energie in Wärme umgewandelt wird. Das Versorgungsnetz führt in der Regel eine Mittelspannung von 11 kV, 30 kV, 33 kV oder 110 kV.

Die ausgangsseitigen Phasenströme, deren Messwerte die Steuereinrichtung entgegennimmt, können nach Bedarf die Ströme primärseitig oder sekundärseitig des Ofentransformators sein, wobei eine primärseitige Messung bevorzugt ist.

Die vorliegende Erfindung geht weiterhin aus von einem Steuerprogramm für eine Steuereinrichtung zum Steuern eines Multilevelkonverters, der Elektroden eines Drehstrom-Lichtbogenofens über einen Ofentransformator aus einem Versorgungsnetz mit mehreren eingangsseitigen Phasen mit elektrischer Energie versorgt, wobei das Steuerprogramm Maschinencode umfasst, der von der Steuereinrichtung unmittelbar abarbeitbar ist, wobei die Abarbeitung des Maschinencodes durch die Steuereinrichtung bewirkt, dass die Steuereinrichtung ein derartiges Steuerverfahren ausführt.

Die vorliegende Erfindung geht weiterhin aus von einer Steuereinrichtung zum Steuern eines Multilevelkonverters, der Elektroden eines Drehstrom-Lichtbogenofens über einen Ofentransformator aus einem Versorgungsnetz mit mehreren eingangsseitigen Phasen mit elektrischer Energie versorgt, wobei die Steuereinrichtung mit einem derartigen Steuerprogramm programmiert ist, so dass die Steuereinrichtung im Betrieb ein derartiges Steuerverfahren ausführt.

Die vorliegende Erfindung geht weiterhin aus von einem Multilevelkonverter, der Elektroden eines Drehstrom-Lichtbogenofens über einen Ofentransformator aus einem Versorgungsnetz mit mehreren eingangsseitigen Phasen mit elektrischer Energie versorgt, wobei der Multilevelkonverter von einer derartigen Steuereinrichtung gesteuert wird.

Stand der Technik

Die oben genannten Gegenstände sind beispielsweise aus der EP 2 329 684 B1 bekannt.

Zusammenfassung der Erfindung

In einem Elektrostahlwerk wird Schrott mittels eines Lichtbogenofens geschmolzen. Dazu werden mehrere (in der Regel drei) Elektroden in einen mit Schrott gefüllten Behälter getaucht und sodann zwischen dem Schrott und den Elektroden Lichtbögen generiert, so dass der Schrott aufgeheizt und geschmolzen wird.

Die an die Elektroden angelegten Spannungen liegen typischerweise im Bereich von mehreren 100 V bis etwas über 1 kV, manchmal bis zu 2 kV. Die Leistung eines industriellen Lichtbogenofens liegt oftmals zwischen 50 MW und 300 MW.

Durch den ständig flackernden Lichtbogen kommt es zu Spannungsschwankungen und - wenn keine Gegenmaßnahmen ergriffen werden - zu erheblichen Netzrückwirkungen. Historisch ist es bekannt, dem Lichtbogenofen Kompensatoren parallel zu schalten, beispielsweise einen sogenannten SVC (static VAR compensator) oder einen sogenannten STATCOM (static compensator). Derartige Kompensatoren sind groß, schwer und teuer. Weiterhin erzeugen sie Verlustleistung und beeinflussen auch andere an das Versorgungsnetz angeschlossene Einheiten.

Aus der EP 2 329 684 B1 ist bekannt, den Lichtbogenofen über einen Multilevelkonverter zu speisen, der eingangsseitig des Ofentransformators angeordnet ist. Mit einem derartigen Umrichter ist es möglich, zusätzlich zu einer genauen Einstellung der Blindleistung auf der Eingangsseite auch die vom Elektrolichtbogenofen aufgenommene Wirkleistung zu regeln. In der genannten EP-Schrift ist ausgeführt, dass über die symmetrische Belastung der Phasen des Versorgungsnetzes mit Wirkleistung hinausgehende Rückwirkungen der Phasen des Lichtbogenofens auf das Versorgungsnetz minimiert werden. Die genaue Art und Weise, auf welche dies erfolgt, ist der genannten EP-Schrift nicht zu entnehmen.

Die Aufgabe der vorliegenden Erfindung besteht darin, genau derartige Möglichkeiten anzugeben.

Die Aufgabe wird durch ein Steuerverfahren mit den Merkmalen des Anspruchs 1 gelöst. Vorteilhafte Ausgestaltungen des Steuerverfahrens sind Gegenstand der abhängigen Ansprüche 2 bis 7.

Erfindungsgemäß wird ein Steuerverfahren der eingangs genannten Art geschaffen, bei dem von der Steuereinrichtung des Multilevelkonverters - zusätzlich zu dem bereits erwähnten Entgegennehmen der Messwerte für die ausgangsseitigen Phasenströme - mit der Zykluszeit immer wieder folgende Schritte ausgeführt werden:

- der Steuereinrichtung wird für einen jeweils aktuellen Zeitpunkt eine momentane ausgangsseitige Sollleistung bekannt,
- die Steuereinrichtung ermittelt anhand der ausgangsseitigen Phasenströme und der ausgangsseitigen Sollleistung für den jeweils aktuellen Zeitpunkt ausgangsseitige Soll-Phasenspannungen, so dass die Summe der Produkte der ausgangsseitigen Soll-Phasenspannungen und anhand der ausgangsseitigen Phasenströme ermittelter Sollwerte für die ausgangsseitigen Phasenströme gleich der momentanen ausgangsseitigen Sollleistung ist,
- die Steuereinrichtung steuert den Multilevelkonverter derart an, dass der Multilevelkonverter mit den ausgangsseitigen Soll-Phasenspannungen korrespondierende ausgangsseitige Phasenspannungen bereitstellt.

Im Rahmen der vorliegenden Erfindung werden die ausgangsseitigen Phasenspannungen also derart bereitgestellt, dass die momentane ausgangsseitige Leistung gleich der gewünschten momentanen ausgangsseitigen Sollleistung ist. Die momentane ausgangsseitige Leistung ergibt sich durch die Summe der Produkte der ausgangsseitigen Phasenspannungen und der ausgangsseitigen Phasenströme. Hierbei wird das jeweilige Vorzeichen von jeweiliger Phasenspannung und jeweiligem Phasenstrom mit berücksichtigt.

Im Rahmen der erfindungsgemäßen Vorgehensweise wird also die momentane ausgangsseitige Leistung geregelt, wie sie sich für den jeweiligen Zeitpunkt durch die Summe der Produkte der ausgangsseitigen Phasenspannungen und der ausgangsseitigen Phasenströme ergibt.

Diese Vorgehensweise steht im Gegensatz zu den Vorgehensweisen des Standes der Technik, bei denen eine Regelung über mehrere Perioden der Netzfrequenz hinweg zu erfolgen scheint. Darauf deuten insbesondere die im Stand der Technik - auch in der EP 2 329 684 B1 - immer wieder verwendeten Begriffe "Wirkleistung" und "Blindleistung" hin. Aus diesem Grund sind im Stand der Technik auch weiterhin Blindleistungskompensatoren vorhanden. Im Rahmen der vorliegenden Erfindung können derartige Kompensatoren hingegen vollständig entfallen. Weiterhin ist vorliegend eine Regelung möglich, die Störungen sehr schnell - binnen 1 ms und weniger-ausregeln kann.

Die momentane Sollleistung kann der Steuereinrichtung als entsprechender Leistungsverlauf bekannt sein. Der Leistungsverlauf kann konstant sein, kann aber auch variieren. Im Falle eines Variierens sollte die Sollleistung vorzugsweise nur langsam variieren.

Über eine volle Periode der Netzfrequenz des Versorgungsnetzes hinweg gesehen werden die Anteile in der Regel im Mittel untereinander gleich groß sein. Es ist jedoch auch eine andere Aufteilung denkbar.

Die Ansteuerung des Multilevelkonverters erfolgt also in vorteilhafter Art und Weise derart, dass sich die erforderlichen Eingangsspannungen für den Ofentransformator ergeben und von dem Multilevelkonverter aus den eingangsseitigen Phasen die jeweiligen Anteile der Wirkleistung (und in der Regel nur die Wirkleistung) aus dem Versorgungsnetz bezogen werden.

Die Ansteuerung des Multilevelkonverters, so dass er ausgangsseitig vorgegebene Phasenspannungen bereitstellt bezieht, ist als solche ohne weiteres möglich. Die Möglichkeiten zur entsprechenden Ansteuerung sind dem Fachmann bekannt. Entscheidend ist vorliegend die Ermittlung der ausgangsseitigen Phasenspannungen.

Vorzugsweise ist der Multilevelkonverter als Zwischenkreisumrichter mit einem eingangsseitigen Gleichrichter und einem ausgangsseitigen Wechselrichter ausgebildet. In diesem Fall steuert die Steuereinrichtung den Wechselrichter derart an, dass der Wechselrichter die ausgangsseitigen Phasenspannungen bereitstellt. Es kann also eine von der Ansteuerung des Gleichrichters nahezu entkoppelte Ermittlung der Ansteuerung des Wechselrichters erfolgen.

Vorzugsweise werden der Steuereinrichtung für den jeweils aktuellen Zeitpunkt auch für die eingangsseitigen Phasen Anteile an der momentanen Sollleistung bekannt. In diesem Fall kann die Steuereinrichtung den Multilevelkonverter derart ansteuern, dass der Multilevelkonverter aus den eingangsseitigen Phasen eingangsseitige Leistungen entsprechend der ihr bekannten Anteile bezieht. Im Falle der Aufteilung des Multilevelkonverters in einen eingangsseitigen Gleichrichter und einen ausgangsseitigen Wechselrichter betrifft dies konkret die entsprechende Ansteuerung des Gleichrichters.

Somit wird - zusätzlich zur Regelung des Leistungsbezugs des Ofentransformators - eingangsseitig die Aufteilung der aus dem Versorgungsnetz insgesamt momentan bezogenen Leistung auf die eingangsseitigen Phasen geregelt, wobei die Aufteilung durch die bekannten Anteile festgelegt ist.

Die aus den eingangsseitigen phasenbezogenen Leistungen ergeben sich, bezogen auf die eingangsseitigen Phasen, durch das Produkt der jeweiligen eingangsseitigen Phasenspannung und des jeweiligen eingangsseitigen Phasenstroms. Hierbei wird das jeweilige Vorzeichen von jeweiliger Phasenspannung und jeweiligem Phasenstrom mit berücksichtigt. Die eingangsseitig aus dem Versorgungsnetz bezogene Leistung wird natürlich etwas größer als die Sollleistung sein, weil im Multilevelkonverter Verluste auftreten.

Die Anteile der eingangsseitigen Phasen an der Sollleistung variieren vorzugsweise ohne Phasenversatz mit den eingangsseitigen Spannungen. Dadurch wird erreicht, dass der Multilevelkonverter- über einen längeren Zeitraum gesehen - aus dem Versorgungsnetz ausschließlich Wirkleistung bezieht. Der Multilevelkonverter bezieht aus dem Versorgungsnetz also vorzugsweise keine Blindleistung. Alternativ ist es möglich, gezielt einen - gegebenenfalls zeitlich variierenden - Phasenversatz einzustellen und dadurch in definierter Weise Blindleistung aus dem Versorgungsnetz zu beziehen. Der Bezug einer definierten Blindleistung kann beispielsweise sinnvoll sein, um die Blindleistung anderer an das Versorgungsnetz angeschlossener Verbraucher zu kompensieren

Das Versorgungsnetz wird mit einer Netzfrequenz betrieben. Die Netzfrequenz liegt üblicherweise bei 50 Hz oder 60 Hz. Natürlich sind auch andere Netzfrequenzen möglich. Vorzugsweise ist der Kehrwert der Zykluszeit mindestens zwanzigmal so groß wie die Netzfrequenz, insbesondere mindestens fünfzigmal so groß. Wenn also beispielsweise die Netzfrequenz 50 Hz beträgt, so aktualisiert die Steuereinrichtung die Ansteuerung des Multilevelkonverters vorzugsweise mindestens jede ms und besonders bevorzugt mindestens alle 0,4 ms. Natürlich sind auch andere Zykluszeiten möglich. Weiterhin kann der Kehrwert der Zykluszeit auch noch größer als das Fünfzigfache der Netzfrequenz sein.

Eine völlig analoge Vorgehensweise kann bezüglich des Ofentransformators ergriffen werden. Insbesondere wird der Ofentransformator mit einer Ofenfrequenz betrieben und es ist vorzugsweise der Kehrwert der Zykluszeit mindestens zwanzigmal so groß wie die Ofenfrequenz, insbesondere mindestens fünfzigmal so groß.

Diese Festlegung der Zykluszeit trägt dem Umstand Rechnung, dass für eine robuste und glatte Regelung mehrere Abtastungen benötigt werden, während derer sich die ausgangsseitigen Phasenströme nicht signifikant ändern.

Die Ermittlung der ausgangsseitigen Phasenspannungen erfolgt vorzugsweise dadurch, dass die Steuereinrichtung

- anhand der Messwerte für die ausgangsseitigen Phasenströme einen komplexen Soll-Stromvektor ermittelt,
- durch Dividieren der momentanen Sollleistung durch den Realteil des Produkts des konjugiert Komplexen des komplexen Soll-Stromvektors und eines komplexen Raumzeigers einen reellen ausgangsseitigen Soll-Spannungswert ermittelt, wobei der komplexe Raumzeiger in der komplexen Ebene die Einheitslänge aufweist und seinen Wert gemäß einer vorbestimmten Ermittlungsvorschrift, insbesondere periodisch, ändert, und
- anhand des ermittelten reellen ausgangsseitigen Soll-Spannungswertes und des komplexen Raumzeigers eine komplexe ausgangsseitige Soll-Spannung und anhand der komplexen ausgangsseitigen Soll-Spannung die ausgangsseitigen Soll-Phasenspannungen ermittelt.

Diese Art der Ermittlung der ausgangsseitigen Phasenspannungen ist einfach, schnell und mit geringem Rechenaufwand zu implementieren.

Für die Art und Weise der Ermittlung des komplexen Raumzeigers gibt es verschiedene Möglichkeiten.

Beispielsweise kann die Steuereinrichtung den komplexen Raumzeiger derart ermitteln, dass der komplexe Raumzeiger in der komplexen Ebene mit einer konstanten Frequenz kontinuierlich rotiert. Diese Vorgehensweise würde, wenn der reelle ausgangsseitige Soll-Spannungswert konstant wäre, mit sinusförmigen Verläufen der ausgangsseitigen Soll-Phasenspannungen korrespondieren.

Ebenso ist es möglich, dass die Steuereinrichtung den komplexen Raumzeiger derart ermittelt, dass der komplexe Raumzeiger in der komplexen Ebene während einer jeweiligen Haltezeit von $T/n$ einen konstanten Wert aufweist und nach Ablauf der jeweiligen Haltezeit seinen Wert sprungartig um einen Winkel von $2\pi/n$ ändert, wobei n die Anzahl an ausgangsseitigen Phasenströmen ist und T eine Periode ist, mit welcher der komplexe Raumzeiger seinen Wert ändert. Diese Vorgehensweise würde, wenn der reelle ausgangsseitige Soll-Spannungswert konstant wäre, mit rechteckförmigen Verläufen der ausgangsseitigen Soll-Phasenspannungen korrespondieren.

Es ist möglich, dass sich in dem zuletzt erläuterten Fall die Spannungsflanken als zu steil herausstellen. In diesem Fall kann die Steuereinrichtung eine geringfügig modifizierte Vorgehensweise ergreifen und den Raumzeiger derart ermitteln, dass die ausgangsseitigen Soll-Phasenspannungen im Falle eines konstanten reellen ausgangsseitigen Soll-Spannungswertes einen trapezförmigen Verlauf aufweisen.

Die obigen Beispiele sind nicht die einzig möglichen. So ist es ebenso möglich, einen beliebigen anderen zeitlichen Verlauf des Winkels des komplexen Raumzeigers (der aber stets die Länge 1 aufweisen muss, sich also in der komplexen Ebene auf dem Einheitskreis bewegt) anzunehmen und den zugehörigen Verlauf der ausgangsseitigen Soll-Phasenspannungen im Falle eines konstanten reellen ausgangsseitigen Soll-Spannungswertes zu ermitteln. Die zugehörigen Verläufe für den Winkel des Raumzeigers können beispielsweise durch einfaches Probieren ermittelt werden, bis die Form der ausgangsseitigen Soll-Phasenspannungen im Falle eines konstanten reellen ausgangsseitigen Soll-Spannungswertes vorgegebene Anforderungen erfüllen. Derartige Anforderungen können beispielsweise (zur Minderung des Risikos von Lichtbogenabrissen) ein schneller, aber nicht zu steiler Nulldurchgang und/oder ansonsten (zur Maximierung der vom Umrichter übertragbaren Leistung) ein möglichst flacher Bereich ähnlich wie bei einem trapezförmigen Verlauf sein.

Weiterhin ist es möglich, die Periode, mit welcher der komplexe Raumzeiger seinen Wert ändert, von Zeit zu Zeit zu variieren. Beispielsweise kann man in einer frühen Schmelzphase, zu der noch die Gefahr besteht, dass Lichtbögen abreißen, eine kürzere Periode ansetzen und die Periode mit fortschreitendem Schmelzvorgang kontinuierlich oder in Stufen erhöhen.

Die Aufgabe wird weiterhin durch ein Steuerprogramm mit den Merkmalen des Anspruchs 8 gelöst. Erfindungsgemäß bewirkt die Abarbeitung des Steuerprogramms durch die Steuereinrichtung, dass die Steuereinrichtung ein erfindungsgemäßes Steuerverfahren ausführt.

Die Aufgabe wird weiterhin durch eine Steuereinrichtung mit den Merkmalen des Anspruchs 9 gelöst. Erfindungsgemäß ist die Steuereinrichtung mit einem erfindungsgemäßen Steuerprogramm programmiert, so dass die Steuereinrichtung im Betrieb ein erfindungsgemäßes Steuerverfahren ausführt.

Die Aufgabe wird weiterhin durch einen Multilevelkonverter mit den Merkmalen des Anspruchs 10 gelöst. Erfindungsgemäß wird der Multilevelkonverter von einer erfindungsgemäßen Steuereinrichtung gesteuert.

Kurze Beschreibung der Zeichnungen

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung eines Ausführungsbeispiels, das im Zusammenhang mit den Zeichnungen näher erläutert wird. Dabei zeigen:

FIG 1     einen Lichtbogenofen und dessen Energieversorgung,
FIG 2     einen Arm eines Multilevelkonverters,
FIG 3     ein Submodul,
FIG 4     ein weiteres Submodul,
FIG 5     ein Ablaufdiagramm,
FIG 6     ein Zeitdiagramm,
FIG 7     ein Ablaufdiagramm,
FIG 8     eine komplexe Ebene,
FIG 9     einen Schritt eines Ablaufdiagramms,

FIG 10     ein Zeitdiagramm und
FIG 11     einen Schritt eines Ablaufdiagramms.

Beschreibung der Ausführungsformen

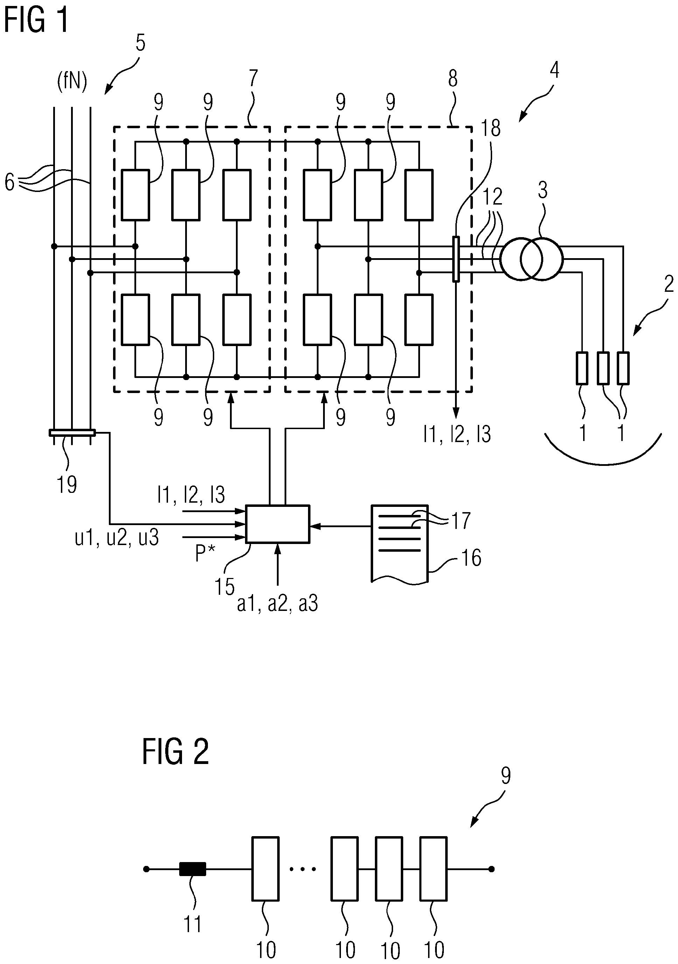

Gemäß FIG 1 werden Elektroden 1 eines Drehstrom-Lichtbogenofens 2 über einen Ofentransformator 3 und einen Multilevelkonverter 4 aus einem Versorgungsnetz 5 mit mehreren eingangsseitigen Phasen 6 (in der Regel drei Phasen 6) mit elektrischer Energie versorgt. Das Versorgungsnetz 5 kann beispielsweise ein Mittelspannungsnetz mit einer Nennspannung von 11 kV, 30 kV, 33 kV oder - in Einzelfällen - von 110 kV sein. Das Versorgungsnetz 5 wird mit einer Netzfrequenz fN betrieben. Die Netzfrequenz fN liegt in der Regel bei 50 Hz oder 60 Hz.

Konkret in der Ausgestaltung von FIG 1 ist der Multilevelkonverter 4 als Zwischenkreisumrichter mit einem eingangsseitigen Gleichrichter 7 und einem ausgangsseitigen Wechselrichter 8 ausgebildet.

Multilevelkonverter sind Fachleuten allgemein bekannt. Multilevelkonverter weisen - siehe auch FIG 2 - Arme 9 auf. Von den Armen 9 sind in FIG 1 nur exemplarisch nur einige wenige mit ihrem Bezugszeichen versehen.

Die Arme 9 bestehen gemäß FIG 2 ihrerseits aus einer mehrstufigen Reihenschaltung von Submodulen 10. In der Regel sind pro Arm 9 acht oder mehr derartiger Submodule 10 vorhanden. Die Submodule 10 sind untereinander gleich aufgebaut. In der Regel befindet sich am Ende der Reihenschaltung weiterhin eine Drossel 11. Die Drossel 11 befindet sich bei einem Arm 9 des Gleichrichters 7 meist an dem einer Phase 6 zugewandten Ende des Armes 9. In analoger Weise befindet sich die Drossel 11 bei einem Arm 9 des Wechselrichters 8 an dem einer ausgangsseitigen Phase 12 (siehe FIG 1) zugewandten Ende des jeweiligen Armes 9.

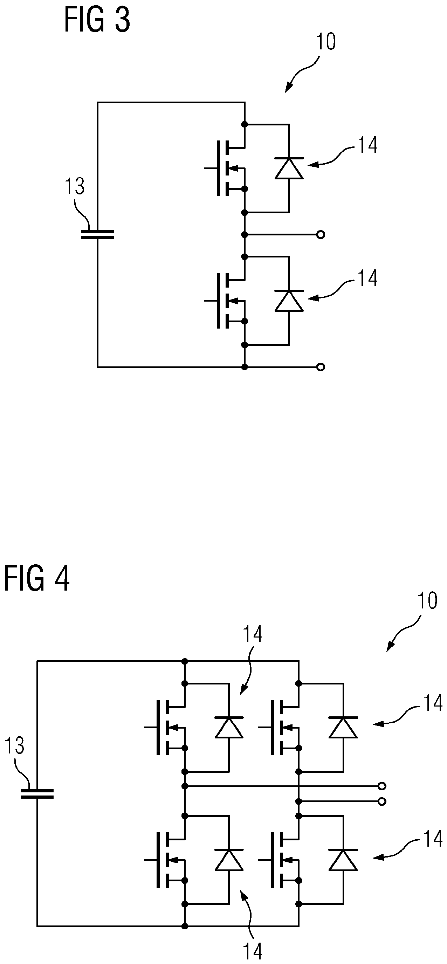

Gemäß FIG 3 umfasst jedes Submodul 10 einen Speicherkondensator 13 und selbstgeführte Halbleiterschalter 14. Der Begriff "selbstgeführt" bedeutet, dass die Halbleiterschalter 14 durch den Halbleiterschaltern 14 von außen zugeführte Steuersignale sowohl zuschaltbar als auch abschaltbar sind. Beispielsweise können die selbstgeführten Halbleiterschalter 14 als IGBTs ausgebildet sein. Der Begriff "selbstgeführt" steht im Gegensatz zum Begriff "netzgeführt". Dieser Begriff bedeutet, dass der jeweilige Halbleiterschalter zwar gezielt zugeschaltet werden kann, jedoch nicht durch ein externes Steuersignal abgeschaltet werden kann. Ein Beispiel für einen netzgeführten Halbleiterschalter ist ein "normaler" Thyristor.

Gemäß FIG 3 weisen die Submodule 10 jeweils einen einzigen Speicherkondensator 13 und genau zwei Halbleiterschalter 14 auf. Diese Konfiguration ist die Minimalkonfiguration der Submodule 10. Alternativ könnten die Submodule 10 gemäß der Darstellung von FIG 4 beispielsweise einen Speicherkondensator 13 und vier Halbleiterschalter 14 in Brückenschaltung aufweisen. Auch könnten die Submodule 10 mehrere einzeln schaltbare Speicherkondensatoren 13 aufweisen. In diesem Fall müssen pro eigenständig schaltbarem Speicherkondensator 13 mindestens zwei Halbleiterschalter 14 vorhanden sein.

Die Halbleiterschalter 14 jedes Submoduls 10 sind unabhängig von den Halbleiterschaltern 14 der anderen Submodule 10 schaltbar. Dies gilt unabhängig davon, ob die anderen Submodule 10 im selben oder in einem anderen Arm 9 des Umrichters 6 angeordnet sind wie das betreffende Submodul 10. Je nach Schaltzustand der Halbleiterschalter 14 des jeweiligen Submoduls 10 ist der Speicherkondensator 13 des jeweiligen Submoduls 10 alternativ überbrückt oder aktiv. Wenn der in FIG 3 obere Halbleiterschalter 14 eines Submoduls 10 geschlossen ist und der andere Halbleiterschalter 14 geöffnet ist, ist der Speicherkondensator 13 des jeweiligen Submoduls 10 aktiv. Wenn umgekehrt der in FIG 3 obere Halbleiterschalter 14 geöffnet ist und der untere Halbleiterschalter 14 geschlossen ist, ist der Speicherkondensator 13 des jeweiligen Submoduls 10 überbrückt. Wenn der Speicherkondensator 13 aktiv ist, trägt die über dem Speicherkondensator 13 abfallende Spannung zur resultierenden Spannung des jeweiligen Armes 9 bei. Ein in dem jeweiligen Arm 9 fließender Strom bewirkt - je nach Richtung des in dem Arm 9 fließenden Stromes und je nach Ladungszustand des Speicherkondensators 13 - ein Laden oder ein Entladen des Speicherkondensators 13. Wenn der Speicherkondensator 13 hingegen überbrückt ist, trägt die über dem Speicherkondensator 13 abfallende Spannung nicht zur resultierenden Spannung des jeweiligen Armes 9 bei. Ein in dem jeweiligen Arm 9 fließender Strom bewirkt weder ein Laden noch ein Entladen des Speicherkondensators 13.

In analoger Weise ist auch der Speicherkondensator 13 des Submoduls 10 von FIG 4 je nach Ansteuerzustand der Halbleiterschalter 14 aktiv oder überbrückt. Im Falle der Ausgestaltung von FIG 4 existiert jedoch ein weiterer Schaltzustand, bei dem die über dem Speicherkondensator 13 abfallende Spannung mit inverser Polung zur resultierenden Spannung des jeweiligen Armes 9 beiträgt.

Der Multilevelkonverter 4 wird gemäß FIG 1 von einer Steuereinrichtung 15 gesteuert. Mittels der Steuereinrichtung 15 erfolgt insbesondere die Ansteuerung der Halbleiterschalter 14 der Submodule 10. Die Art und Weise, wie die Halbleiterschalter 14 der Submodule 10 angesteuert werden, ist Fachleuten bekannt.

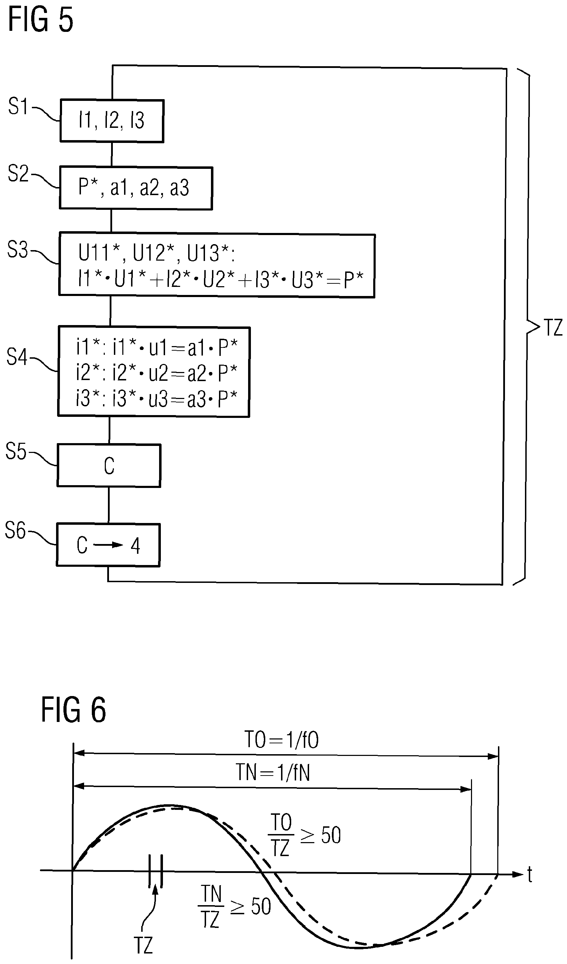

Die Steuereinrichtung 15 ist mit einem Steuerprogramm 16 programmiert. Das Steuerprogramm 16 umfasst Maschinencode 17, der von der Steuereinrichtung 15 unmittelbar abarbeitbar ist. Die Programmierung der Steuereinrichtung 15 mit dem Steuerprogramm 16 bzw. - im Ergebnis gleichbedeutend - die Abarbeitung des Maschinencodes 17 durch die Steuereinrichtung 15 bewirkt, dass die Steuereinrichtung 15 ein Steuerverfahren ausführt, das nachstehend in Verbindung mit FIG 5 näher erläutert wird.

Gemäß FIG 5 führt die Steuereinrichtung 15 zyklisch immer wieder Schritte S1 bis S6 aus. Die Ausführung erfolgt mit einer Zykluszeit TZ. Die Zykluszeit TZ ist entsprechend der Darstellung in FIG 6 sehr klein. In aller Regel liegt die Zykluszeit TZ unter 1 ms. Insbesondere ist die Zykluszeit TZ erheblich kleiner als eine Periodenzeit TN = 1/fN des Versorgungsnetzes 5. Konkret zeigt FIG 6 eine einzelne Periode einer der an den eingangsseitigen Phasen 6 anstehenden Spannungen, die zugehörige Periodenzeit TN und die Zykluszeit TZ.

Vorzugsweise gilt, dass der Kehrwert der Zykluszeit TZ mindestens zwanzigmal so groß wie die Netzfrequenz fN ist, vorzugsweise mindestens fünfzigmal so groß. Bei einer Netzfrequenz fN von 50 Hz liegt somit die Zykluszeit TZ vorzugsweise bei 1,0 ms oder darunter, beispielsweise bei 0,4 ms, bei 0,2 ms oder bei 0,1 ms. Konkret kann beispielsweise ein Regeltakt von 8 kHz oder 16 kHz realisiert werden, was mit einer Zykluszeit TZ von 125 µs bzw. 62,5 µs korrespondiert.

Analoge Ausführungen gelten für das Verhältnis der Zykluszeit TZ zu einer Periodenzeit TO des Ofentransformators 3. Die Periodenzeit TO ist der Kehrwert der Frequenz fO, mit welcher der Ofentransformator 3 betrieben wird. Die Ofenfrequenz fO kann - rein zufällig - den gleichen Wert wie die Netzfrequenz fN aufweisen. In der Regel sind die beiden Frequenzen fO, fN aber voneinander verschieden.

Gemäß FIG 5 nimmt die Steuereinrichtung 15 im Schritt S1 von einer Messeinrichtung 18 (siehe FIG 1) ausgangsseitige Phasenströme I1 bis I3 (genauer: die entsprechenden Messwerte) entgegen. Die ausgangsseitigen Phasenströme I1 bis I3 sind diejenigen Ströme, die ausgangsseitig des Multilevelkonverters 4 fließen. In der Regel handelt es sich um die Ströme eingangsseitig des Ofentransformators 3. Falls es sich umgekehrt um die Ströme ausgangsseitig des Ofentransformators 3 handelt, kann anhand des Übersetzungsverhältnisses des Ofentransformators 3 ohne weiteres eine Umrechnung auf die Ströme eingangsseitig des Ofentransformators 3 erfolgen. Die Messwerte I1 bis I3 sind nur für den jeweiligen Zyklus gültig.

Genau genommen ist es ausreichend, wenn die Steuereinrichtung 15 die Messwerte für zwei der ausgangsseitigen Phasenströme I1 bis I3 entgegennimmt, da stets und zu jedem Zeitpunkt die Beziehung

$$I1 + I2 + I3 = 0 \qquad\qquad (1)$$

gelten muss. Anhand von zwei der Messwerte I1 bis I3 kann daher stets der verbleibende ausgangsseitige Phasenstrom I1 bis I3 ermittelt werden.

Im Schritt S2 wird der Steuereinrichtung 15 zumindest eine momentane ausgangsseitige Sollleistung P*bekannt. Vorzugsweise werden der Steuereinrichtung 15 zugleich auch für die eingangsseitigen Phasen 6 Anteile a1, a2, a3

an der momentanen Sollleistung P* bekannt. Sowohl die momentane ausgangsseitige Sollleistung P* als auch die Anteile a1, a2, a3 sind nur für den aktuellen Zyklus gültig. Für die Anteile a1, a2, a3 gilt stets die Beziehung

$$a1 + a2 + a3 = 1. \qquad (2)$$

Weiterhin sind in aller Regel die Anteile a1, a2, a3 nicht negativ, also größer als 0 oder gleich 0.

Es ist möglich, dass der Steuereinrichtung 15 vorab für eine Vielzahl von Zyklen die zeitlichen Verläufe für die momentane ausgangsseitige Sollleistung P* und/oder die Anteile a1, a2, a3 bekannt sind. Auch in diesem Fall ermittelt die Steuereinrichtung 15 jedoch anhand der ihr bekannten zeitlichen Verläufe im Schritt S2 für den jeweiligen Zyklus die aktuellen Werte P*, a1, a2, a3.

Die Anteile a1, a2 und a3 können insbesondere Verläufe aufweisen, die jeweils mit dem Quadrat eines sinusförmigen Verlaufs korrespondieren, wobei der jeweilige zeitliche Verlauf phasengleich zum korrespondierenden Spannungsverlauf der jeweiligen eingangsseitigen Phase 6 ist. Unter der Voraussetzung, dass die ausgangsseitige Sollleistung P* sich in zeitlicher Hinsicht nicht oder nur langsam ändert, ergibt sich damit eine völlig flickerfreie Belastung des Versorgungsnetzes 5 ausschließlich mit Wirkleistung.

Im Schritt S3 ermittelt die Steuereinrichtung 15 für die ausgangsseitigen Phasen 12 ausgangsseitige Soll-Phasenspannungen U1*, U2*, U3*. Die Ermittlung erfolgt anhand von Sollwerten I1*, I2*, I3* für die ausgangsseitigen Phasenströme I1, I2, I3 und der ausgangsseitigen Sollleistung P*. Die Sollwerte I1*, I2*, I3* ermittelt die Steuereinrichtung 15 zuvor anhand der ausgangsseitigen Phasenströme I1, I2, I3. Aufgrund des Umstands, dass sowohl die Messwerte I1 bis I3 als auch die momentane ausgangsseitige Sollleistung P* nur für den jeweiligen Zyklus gültig sind, erfolgt auch die Ermittlung der ausgangsseitigen Soll-Phasenspannungen U1*, U2*, U3* nur für den jeweiligen Zyklus und damit nur für den jeweils aktuellen Zeitpunkt. Die Ermittlung des Schrittes S3 erfolgt derart, dass die Summe der Produkte der ausgangsseitigen Soll-Phasenspannungen U1*, U2*, U3* und der ausgangsseitige Phasenströme I1, I2, I3 gleich der momentanen ausgangsseitigen Sollleistung P* ist. Die Ermittlung des Schrittes S3 erfolgt also derart, dass die Beziehung

$$I1^* \cdot U1^* + I2^* \cdot U2^* + I3^* \cdot U3^* = P^* \qquad (3)$$

gilt. Der Schritt S3 wird später noch detailliert erläutert werden.

Der Schritt S4 ist nur vorhanden, wenn der Steuereinrichtung 15 im Schritt S2 nicht nur die momentane ausgangsseitige Sollleistung P*, sondern auch die Anteile a1, a2, a3 bekannt werden. Im Schritt S4 ermittelt die Steuereinrichtung 15 eingangsseitige Soll-Phasenströme i1*, i2*, i3*. Die Ermittlung erfolgt derart, dass die Beziehungen

$$i1^* \cdot u1 = a1 \cdot P^*, \qquad (4)$$

$$i2^* \cdot u2 = a2 \cdot P^* \text{ und} \qquad (5)$$

$$i3^* \cdot u3 = a3 \cdot P^*. \qquad (6)$$

gelten. u1, u2, u3 sind die eingangsseitigen Phasenspannungen. Die eingangsseitigen Phasenspannungen u1, u2, u3 können beispielsweise mittels einer Messeinrichtung 19 (siehe FIG 1) erfasst und an die Steuereinrichtung 15 übermittelt werden.

Genau genommen müssten im Rahmen der Ermittlung des Schrittes S4 auch die im Multilevelkonverter 4 auftretenden Verluste mit berücksichtigt werden. Dies ist Fachleuten jedoch ohne weiteres bekannt und geläufig. Der im Rahmen der Gleichungen (4) bis (6) verwendete Wert für die Sollleistung P* müsste also etwas größer als die momentane ausgangsseitige Sollleistung P* sein.

Im Schritt S5 ermittelt die Steuereinrichtung 15 eine Ansteuerung C für den Multilevelkonverter 4. Die Ermittlung des Schrittes S5 erfolgt basierend auf ausgangsseitigen Soll-Phasenspannungen U1*, U2*, U3* und gegebenenfalls auch den eingangsseitigen Soll-Phasenströmen i1*, i2*, i3*. Im Schritt S6 steuert die Steuereinrichtung 15 den Multilevelkonverter 4 entsprechend der im Schritt S5 ermittelten Ansteuerung C an.

Somit wird im Ergebnis erreicht, dass der Multilevelkonverter 4 ausgangsseitige Phasenspannungen bereitstellt, die mit den ausgangsseitigen Soll-Phasenspannungen U1*, U2*, U3* korrespondieren, und gegebenenfalls auch aus den eingangsseitigen Phasen 6 eingangsseitige Leistungen entsprechend der Anteile a1, a2, a3 bezieht.

Wie bereits erwähnt, ist der Multilevelkonverter 4 im Rahmen der Ausgestaltung von FIG 1 in einen Gleichrichter 7 und einen Wechselrichter 8 aufgeteilt. In diesem Fall erfolgt im Rahmen des Schrittes S5 eine getrennte Ermittlung für die Ansteuerung des Gleichrichters 7 und die Ansteuerung des Wechselrichters 8. Konkret erfolgt die Ermittlung durch die Steuereinrichtung 15 im Schritt S5 derart, dass der Wechselrichter 8 die ausgangsseitigen Phasenspannungen bereitstellt. Ermöglicht wird dies durch die Entkopplung der einzelnen eingangsseitigen Phasen 6 und der ausgangsseitigen Phasen 12 durch den Gleichspannungszwischenkreis zwischen dem Gleichrichter 7 und dem Wechselrichter 8. Im Falle der Vorgabe der Anteile a1, a2, a3 erfolgt die Ermittlung der Ansteuerung C zugleich auch derart, dass der Gleichrichter 7 aus den eingangsseitigen Phasen 6 die eingangsseitigen Leistungen entsprechend der Anteile a1, a2, a3 bezieht.

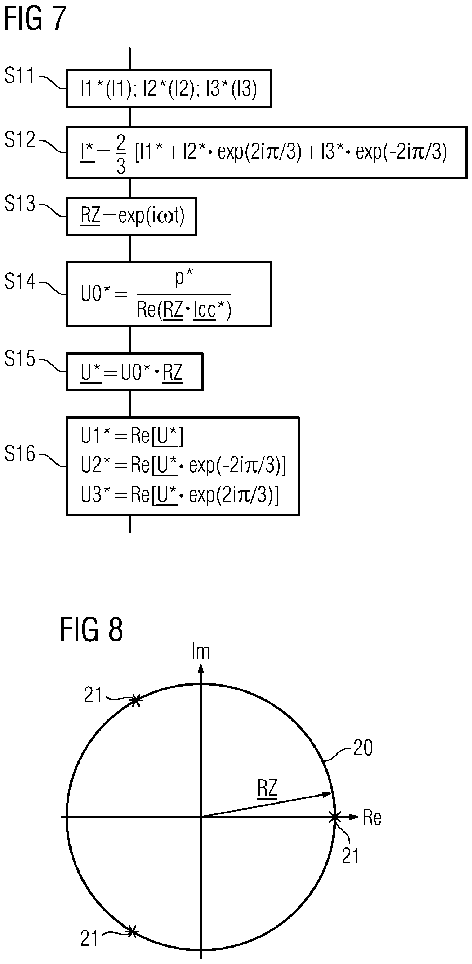

Nachstehend wird in Verbindung mit FIG 7 eine mögliche und derzeit bevorzugte Implementierung des Schrittes S3 von FIG 5 erläutert.

Gemäß FIG 7 ermittelt die Steuereinrichtung 15 zunächst in einem Schritt S11 anhand der Messwerte für die ausgangsseitigen Phasenströme I1, I2, I3 Sollwerte I1*, I2*, I3* für die ausgangsseitigen Phasenströme I1, I2, I3. Im einfachsten Fall übernimmt die Steuereinrichtung 15 direkt die ausgangsseitigen Phasenströme I1, I2, I3 als Sollwerte I1*, I2*, I3*. Alternativ ist es möglich, dass die Steuereinrichtung 15 berücksichtigt, dass die Phasenströme I1, I2, I3 im Idealfall sinusförmig verlaufen und gleiche Amplituden aufweisen. In diesem Fall kann die Steuereinrichtung 15 zum einen prinzipiell die Sollwerte I1*, I2*, I3* durch Fortschreibung der ausgangsseitigen Phasenströme I1, I2, I3 entsprechend dem gewünschten sinusförmigen Verlauf weiterentwickeln und weiterhin bei Abweichungen korrigierend eingreifen. In jedem Fall aber berücksichtigt die Steuereinrichtung 15, dass aufgrund der ausgangsseitigen Induktivitäten (insbesondere des Ofentransformators 3) die ausgangsseitigen Phasenströme I1, I2, I3 ihre Werte von Zyklus zu Zyklus nicht sprungartig ändern können.

In einem Schritt S12 ermittelt die Steuereinrichtung 15 anhand der Sollwerte I1*, I2*, I3* einen komplexen Soll-Stromvektor $\underline{I}^*$. Die Ermittlung erfolgt gemäß der Beziehung

$$\underline{I}^* = \frac{2}{3} \cdot [I1^* + I2^* \cdot \exp(2i\pi/3) + I3^* \cdot \exp(-2i\pi/3)] \qquad (7)$$

In einem Schritt S13 ermittelt die Steuereinrichtung 15 einen komplexen Raumzeiger $\underline{RZ}$. Der komplexe Raumzeiger $\underline{RZ}$ weist in der komplexen Ebene die Einheitslänge auf, also die Länge 1. Weiterhin ändert der komplexe Raumzeiger $\underline{RZ}$ seinen Wert periodisch. Der komplexe Raumzeiger $\underline{RZ}$ verläuft daher gemäß FIG 8 in der komplexen Ebene auf dem Einheitskreis 20 um den Ursprung. Im Rahmen der Ausgestaltung gemäß FIG 7 rotiert der komplexe Raumzeiger $\underline{RZ}$ in der komplexen Ebene kontinuierlich mit einer konstanten Frequenz, wobei die Frequenz durch $\omega/2\pi$ bestimmt ist und $\omega$ die Kreisfrequenz ist. Der komplexe Raumzeiger $\underline{RZ}$ fährt also sozusagen immer wieder den Einheitskreis 20 entlang. Die Frequenz, mit welcher der komplexe Raumzeiger $\underline{RZ}$ rotiert, kann prinzipiell frei gewählt werden. In der Regel wird die Frequenz jedoch von der Netzfrequenz fN verschieden sein.

In einem Schritt S14 ermittelt die Steuereinrichtung 15 einen reellen ausgangsseitigen Soll-Spannungswert U0*. Die Ermittlung erfolgt dadurch, dass die Steuereinrichtung 15 die momentane Sollleistung P* durch den Realteil des Produkts des konjugiert Komplexen Icc* des komplexen Soll-Stromvektors $\underline{I}^*$ und des komplexen Raumzeigers $\underline{RZ}$ dividiert:

$$U0^* = \frac{P^*}{\mathrm{Re}(\underline{RZ} \cdot \underline{Icc}^*)} . \qquad (8)$$

Hierauf aufbauend ermittelt die Steuereinrichtung 15 in einem Schritt S15 eine komplexe ausgangsseitige Soll-Spannung $\underline{U}^*$. Sie multipliziert hierzu den reellen ausgangsseitigen Soll-Spannungswert U0* mit dem komplexen Raumzeiger $\underline{RZ}$:

$$\underline{U}^* = U0^* \cdot \underline{RZ} . \qquad (9)$$

Schließlich ermittelt die Steuereinrichtung 15 in einem Schritt S16 anhand der komplexen ausgangsseitigen Soll-Spannung U* die ausgangsseitigen Soll-Phasenspannungen U1*, U2*, U3*.

Dies erfolgt anhand der Beziehungen

$$U1^* = \mathrm{Re}[\underline{U}^*], \qquad (10)$$

$$U2^* = \mathrm{Re}[\underline{U}^* \cdot \exp(-2i\pi/3)] . \qquad (11)$$

$$U3^* = \mathrm{Re}[\underline{U}^* \cdot \exp(2i\pi/3)] . \qquad (12)$$

Vorstehend wurde eine Vorgehensweise erläutert, bei welcher der komplexe Raumzeiger $\underline{RZ}$ in der komplexen Ebene kontinuierlich mit der konstanten Frequenz $\omega/2\pi$ rotiert. Würde sich der reelle ausgangsseitige Soll-Spannungswert U0* zeitlich nicht ändern, würde dies mit einem sinusförmigen Verlauf der ausgangsseitigen Soll-Phasenspannungen U1*, U2*, U3* (ein sinusförmiger Verlauf ist in FIG 6 für eine der eingangsseitigen Phasenspannungen dargestellt) korrespondieren.

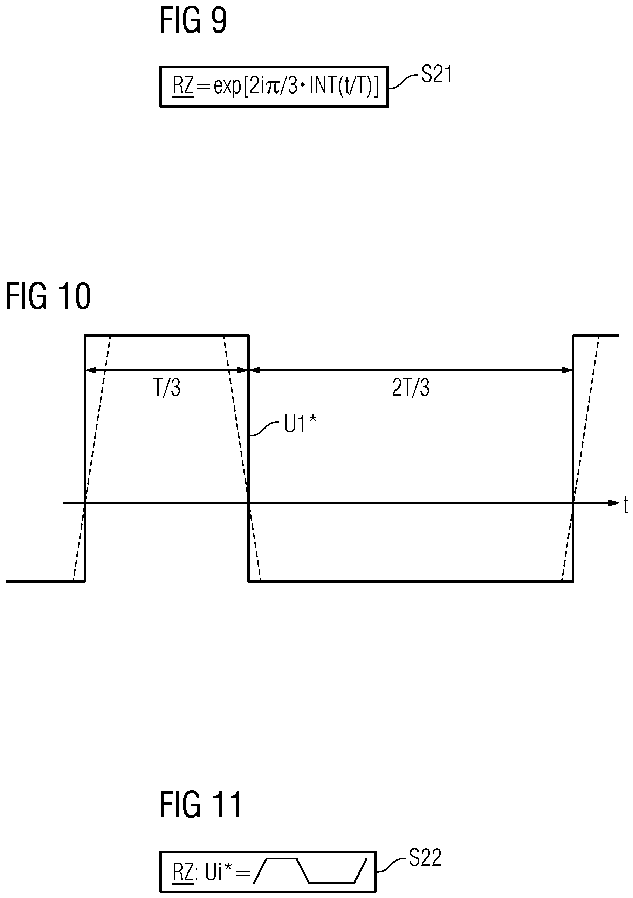

Es sind aber auch andere Vorgehensweisen für den funktionalen Verlauf des komplexen Raumzeigers $\underline{RZ}$ als Funktion der Zeit möglich. Beispielsweise ist es möglich, dass die Vorgehensweise von FIG 7 zwar vom Ansatz her beibehalten wird, der Schritt S13 jedoch durch einen Schritt S21 (siehe FIG 9) ersetzt wird. Die anderen Schritte von FIG 7, also die Schritte S11, S12 und S14 bis S16 können unverändert beibehalten werden. Im Schritt S21 ermittelt die Steuereinrichtung 15 den komplexen Raumzeiger $\underline{RZ}$ gemäß der Beziehung

$$\underline{RZ} = \exp[(2\mathrm{i}\pi/3) \cdot \mathrm{INT}(\mathrm{t}/\mathrm{T})]. \tag{13}$$

Der Operator INT bedeutet die übliche INTEGER-Operation, also das Abrunden auf den nächsten ganzzahligen Wert.

Die Vorgehensweise des Schrittes S21 hat in der komplexen Ebene zur Folge, dass der komplexe Raumzeiger $\underline{RZ}$ während einer jeweiligen Haltezeit einen konstanten Wert aufweist und nach Ablauf der jeweiligen Haltezeit seinen Wert sprungartig um einen Winkel von 360°/3 = 120° (bzw. $2\pi/3$) ändert. Die drei Werte liegen auf dem Einheitskreis 20. Sie sind in FIG 8 durch kleine Kreuze 21 auf dem Einheitskreis 20 markiert. Die Darstellung entspricht der üblichen Vorgehensweise, bei welcher drei ausgangsseitige Phasen 12 vorhanden sind. Allgemein weist die Haltezeit den Wert T/n auf, wobei n die Anzahl an ausgangsseitigen Phasenströmen I1, I2, I3 ist und T die Periode ist, mit welcher der komplexe Raumzeiger $\underline{RZ}$ seinen Wert ändert. Bezogen auf die ausgangsseitigen Soll-Phasenspannungen U1*, U2*, U3* entspricht die Vorgehensweise mit dem Schritt S21 dem Sachverhalt, dass die ausgangsseitigen Soll-Phasenspannungen U1*, U2*, U3* einen rechteckförmigen Verlauf aufweisen würden, wenn der reelle Soll-Spannungswert U0* konstant gehalten würde. Der entsprechende Verlauf ist in FIG 10 beispielhaft für die Soll-Phasenspannung U1* in durchgezogenen Linien dargestellt. Die Vorgehensweise von FIG 9 weist insbesondere den Vorteil auf, dass der Multilevelkonverter 4 so weit wie möglich ausgenutzt werden kann.

Wiederum alternativ ist es möglich, dass die Vorgehensweise von FIG 7 zwar vom Ansatz her beibehalten wird, der Schritt S13 jedoch durch einen Schritt S22 (siehe FIG 11) ersetzt wird. Die anderen Schritte von FIG 7, also die Schritte S11, S12 und S14 bis S16 können wieder unverändert beibehalten werden. Im Schritt S22 ermittelt die Steuereinrichtung 15 den komplexen Raumzeiger $\underline{RZ}$ derart, dass die ausgangsseitigen Soll-Phasenspannungen U1*, U2*, U3* im Falle eines konstanten reellen ausgangsseitigen Soll-Spannungswertes U0* einen trapezförmigen Verlauf aufweisen. Der entsprechende Verlauf ist in FIG 10 beispielhaft für die Soll-Phasenspannung U1* in gestrichelten Linien dargestellt.

Für die Ermittlung des zeitlichen Verlaufs des komplexen Raumzeigers $\underline{RZ}$ kann in diesem Fall vorab gerechnet und im Rahmen dieser Rechnung "rückwärts gedacht" werden. In diesem Fall wird zunächst für konstante und untereinander gleiche Amplituden der ausgangsseitigen Soll-Phasenspannungen U1*, U2*, U3* der (theoretisch) gewünschte zeitliche Verlauf der ausgangsseitigen Soll-Phasenspannungen U1*, U2*, U3* angesetzt. Sodann wird gemäß der Beziehung

$$\underline{U}^* = \frac{2}{3} \cdot [U1^* + U2^* \cdot \exp(2\mathrm{i}\pi/3) + U3^* \cdot \exp(-2\mathrm{i}\pi/3)] \tag{14}$$

der sich ergebende Verlauf der zugehörigen komplexen ausgangsseitigen Soll-Spannung $\underline{U}^*$ ermittelt. Schließlich wird die komplexe ausgangsseitige Soll-Spannung $\underline{U}^*$ in ihren reellen Soll-Spannungswert U0* und den zugehörigen komplexen Raumzeiger $\underline{RZ}$ aufgeteilt. Dadurch ist der gesuchte zeitliche Verlauf des komplexen Raumzeigers $\underline{RZ}$ bekannt. Der zeitliche Verlauf des komplexen Raumzeigers $\underline{RZ}$ kann somit im Rahmen der entsprechend FIG 11 modifizierten Vorgehensweise von FIG 7 verwendet werden. Die Vorgehensweise von FIG 9 ist insbesondere dann von Vorteil, wenn der Multilevelkonverter 4 zwar so weit wie möglich ausgenutzt werden soll, ein abruptes Umschalten der ausgangsseitigen Phasenspannungen sich aber als problematisch herausstellen sollte.

Es sind auch andere Ermittlungsvorschriften für die Ermittlung des komplexen Raumzeigers $\underline{RZ}$ denkbar.

Die vorliegende Erfindung weist viele Vorteile auf. Insbesondere kann Flicker nahezu vollständig vermieden werden. Der Lichtbogenofen 2 wird durch die erfindungsgemäße Vorgehensweise zu einer gut handhabbaren - sozusagen "gezähmten" - Last. Dies gilt auch dann, wenn weder eingangsseitig noch ausgangsseitig des Multilevelkonverters 4 aktive oder passive Kompensatoren angeordnet sind. Dies gilt weiterhin auch dann, wenn sich extreme Betriebszustände des Lichtbogenofens 2 ergeben, beispielsweise einer der Lichtbögen kurzzeitig abreißt. In diesem Fall können die Leistungen für die beiden verbleibenden Lichtbögen durch entsprechende Anpassung der ausgangsseitigen Phasenspannungen und/oder der ausgangsseitigen Phasenströme I1, I2, I3 angepasst werden.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Bezugszeichenliste

| | |
|---|---|
| 1 | Elektroden |
| 2 | Lichtbogenofen |
| 3 | Ofentransformator |
| 4 | Multilevelkonverter |
| 5 | Versorgungsnetz |
| 6 | eingangsseitige Phasen |
| 7 | Gleichrichter |
| 8 | Wechselrichter |
| 9 | Arme |
| 10 | Submodule |
| 11 | Drosseln |
| 12 | ausgangsseitige Phasen |
| 13 | Speicherkondensatoren |
| 14 | Halbleiterschalter |
| 15 | Steuereinrichtung |
| 16 | Steuerprogramm |
| 17 | Maschinencode |
| 18, 19 | Messeinrichtungen |
| 20 | Einheitskreis |
| 21 | Kreuze |
| a1, a2, a3 | Anteile an der Sollleistung |
| C | Ansteuerung |
| fN, fO | Frequenzen |
| $\underline{I^*}$ | komplexer Soll-Stromvektor |
| $\underline{Icc^*}$ | konjugiert Komplexes des komplexen Soll-Stromvektors $\underline{I^*}$ |
| I1, I2, I3 | Messwerte für ausgangsseitige Phasenströme |
| i1*, i2*, i3* | eingangsseitige Soll-Phasenströme |
| I1*, I2*, I3* | ausgangsseitige Soll-Phasenströme |
| P* | Sollleistung |
| $\underline{RZ}$ | Raumzeiger |
| S1 bis S22 | Schritte |
| T | Periode |
| TN, TO | Periodenzeiten |
| TZ | Zykluszeit |
| U1*, U2*, U3* | ausgangsseitige Soll-Phasenspannungen |
| U0* | reeller Soll-Spannungswert |
| $\underline{U^*}$ | komplexe ausgangsseitige Soll-Spannung |
| ω | Kreisfrequenz |

**Patentansprüche**

1. Steuerverfahren für einen Multilevelkonverter (4), der Elektroden (1) eines Drehstrom-Lichtbogenofens (2) über einen Ofentransformator (3) aus einem Versorgungsnetz (5) mit mehreren eingangsseitigen Phasen (6) mit elektrischer Energie versorgt, mit folgenden, mit einer Zykluszeit (TZ) immer wieder ausgeführten Schritten:

   - eine Steuereinrichtung (15) des Multilevelkonverters (4) nimmt Messwerte für ausgangsseitige Phasenströme (I1, I2, I3) entgegen, die ausgangsseitig des Multilevelkonverters (4) flie-ßen,
   - der Steuereinrichtung (15) wird für einen jeweils aktuellen Zeitpunkt eine momentane ausgangsseitige Sollleistung (P*) bekannt,
   - die Steuereinrichtung (15) ermittelt anhand der ausgangsseitigen Phasenströme (I1, I2, I3) und der ausgangsseitigen Sollleistung (P*) für den jeweils aktuellen Zeitpunkt ausgangsseitige Soll-Phasenspannungen (U1*, U2*, U3*), so dass die Summe der Produkte der ausgangsseitigen Soll-Phasenspannungen (U1*, U2*, U3*) und anhand der ausgangsseitigen Phasenströme (I1, I2, I3) ermittelter Sollwerte (I1*, I2*, I3*) für die ausgangsseitigen Phasenströme (I1, I2, I3) gleich der momentanen ausgangsseitigen Sollleistung (P*) ist,
- die Steuereinrichtung (15) steuert den Multilevelkonverter (4) derart an, dass der Multilevelkonverter (4) mit den ausgangsseitigen Soll-Phasenspannungen (U1*, U2*, U3*) korrespondierende ausgangsseitige Phasenspannungen bereitstellt.

2. Steuerverfahren nach Anspruch 1,
**dadurch gekennzeichnet,**

- **dass** der Multilevelkonverter (4) als Zwischenkreisumrichter mit einem eingangsseitigen Gleichrichter (7) und einem ausgangsseitigen Wechselrichter (8) ausgebildet ist und
- **dass** die Steuereinrichtung (15) den Wechselrichter (8) derart ansteuert, dass der Wechselrichter (8) die ausgangsseitigen Phasenspannungen bereitstellt.

3. Steuerverfahren nach Anspruch 2,
**dadurch gekennzeichnet,**

- **dass** der Steuereinrichtung (15) für den jeweils aktuellen Zeitpunkt auch für die eingangsseitigen Phasen (6) Anteile (a1, a2, a3) an der momentanen Sollleistung (P*) bekannt werden und
- **dass** die Steuereinrichtung (15) den Gleichrichter (7) derart ansteuert, dass der Gleichrichter (7) aus den eingangsseitigen Phasen (6) eingangsseitige Leistungen entsprechend der ihr bekannten Anteile (a1, a2, a3) bezieht.

4. Steuerverfahren nach Anspruch 1,
**dadurch gekennzeichnet,**

- **dass** der Steuereinrichtung (15) für den jeweils aktuellen Zeitpunkt auch für die eingangsseitigen Phasen (6) Anteile (a1, a2, a3) an der momentanen Sollleistung (P*) bekannt werden und
- **dass** die Steuereinrichtung (15) den Multilevelkonverter (4) derart ansteuert, dass der Multilevelkonverter (4) aus den eingangsseitigen Phasen (6) eingangsseitige Leistungen entsprechend der ihr bekannten Anteile (a1, a2, a3) bezieht.

5. Steuerverfahren nach einem der obigen Ansprüche,
**dadurch gekennzeichnet,**
**dass** das Versorgungsnetz (5) mit einer Netzfrequenz (fN) betrieben wird und dass der Kehrwert der Zykluszeit (TZ) mindestens zwanzigmal so groß wie die Netzfrequenz (fN) ist, vorzugsweise mindestens fünfzigmal so groß.

6. Steuerverfahren nach einem der obigen Ansprüche,
**dadurch gekennzeichnet,**
**dass** der Ofentransformator (3) mit einer Ofenfrequenz (fO) betrieben wird und dass der Kehrwert der Zykluszeit (TZ) mindestens zwanzigmal so groß wie die Ofenfrequenz (fO) ist, vorzugsweise mindestens fünfzigmal so groß.

7. Steuerverfahren nach einem der obigen Ansprüche,
**dadurch gekennzeichnet,**
**dass** die Steuereinrichtung (15)

- anhand der Messwerte für die ausgangsseitigen Phasenströme (I1, I2, I3) einen komplexen Soll-Stromvektor (I*) ermittelt,
- durch Dividieren der momentanen Sollleistung (P*) durch den Realteil des Produkts des konjugiert Komplexen (Icc*) des komplexen Soll-Stromvektors (I*) und eines komplexen Raumzeigers (RZ) einen reellen ausgangsseitigen Soll-Spannungswert (U0*) ermittelt, wobei der komplexe Raumzeiger (RZ) in der imaginären Ebene die Einheitslänge aufweist und seinen Wert gemäß einer vorbestimmten Ermittlungsvorschrift, insbesondere periodisch, ändert, und
- anhand des ermittelten reellen ausgangsseitigen Soll-Spannungswertes (U0*) und des komplexen Raumzeigers (RZ) eine komplexe ausgangsseitige Soll-Spannung (U*) und anhand der komplexen ausgangsseitigen Soll-Spannung (U*) die ausgangsseitigen Soll-Phasenspannungen (U1*, U2*, U3*) ermittelt.

8. Steuerverfahren nach Anspruch 7,
**dadurch gekennzeichnet,**
**dass** die Steuereinrichtung (15) den komplexen Raumzeiger (RZ) derart ermittelt, dass der komplexe Raumzeiger (RZ) in der imaginären Ebene mit einer konstanten Frequenz kontinuierlich rotiert.

9. Steuerverfahren nach Anspruch 7,
**dadurch gekennzeichnet,**
**dass** die Steuereinrichtung (15) den komplexen Raumzeiger (RZ) derart ermittelt, dass der komplexe Raumzeiger (RZ) in der imaginären Ebene während einer jeweiligen Haltezeit von T/n einen konstanten Wert aufweist und nach Ablauf der jeweiligen Haltezeit seinen Wert sprungartig um einen Winkel von $2\pi/n$ ändert, wobei n die Anzahl an ausgangsseitigen Phasenströmen (I1, I2, I3) ist und T eine Periode ist, mit welcher der komplexe Raumzeiger (RZ) seinen Wert ändert.

10. Steuerverfahren nach Anspruch 7,
**dadurch gekennzeichnet,**
**dass** die Steuereinrichtung (15) den Raumzeiger (RZ) derart ermittelt, dass die ausgangsseitigen Soll-Phasenspannungen (U1*, U2*, U3*) im Falle eines konstanten reellen ausgangsseitigen Soll-Spannungswertes (U0*) einen trapezförmigen Verlauf aufweisen.

11. Steuerprogramm für eine Steuereinrichtung (15) zum Steuern eines Multilevelkonverters (4), der Elektroden (1) eines Drehstrom-Lichtbogenofens (2) über einen Ofentransformator (3) aus einem Versorgungsnetz (5) mit mehreren eingangsseitigen Phasen (6) mit elektrischer Energie versorgt, wobei das Steuerprogramm Maschinencode (17) umfasst, der von der Steuereinrichtung (15) unmittelbar abarbeitbar ist, wobei die Abarbeitung des Maschinencodes (17) durch die Steuereinrichtung (15) bewirkt, dass die Steuereinrichtung (15) ein Steuerverfahren nach einem der obigen Ansprüche ausführt.

12. Steuereinrichtung zum Steuern eines Multilevelkonverters (4), der Elektroden (1) eines Drehstrom-Lichtbogenofens (2) über einen Ofentransformator (3) aus einem Versorgungsnetz (5) mit mehreren eingangsseitigen Phasen (6) mit elektrischer Energie versorgt, wobei die Steuereinrichtung mit einem Steuerprogramm (16) nach Anspruch 11 programmiert ist, so dass die Steuereinrichtung im Betrieb ein Steuerverfahren nach einem der Ansprüche 1 bis 10 ausführt.

13. Multilevelkonverter, der Elektroden (1) eines Drehstrom-Lichtbogenofens (2) über einen Ofentransformator (3) aus einem Versorgungsnetz (5) mit mehreren eingangsseitigen Phasen (6) mit elektrischer Energie versorgt, wobei der Multilevelkonverter von einer Steuereinrichtung (15) nach Anspruch 12 gesteuert wird.

# FIG 1

I1, I2, I3

u1, u2, u3

P*

a1, a2, a3

# FIG 2

## FIG 3

## FIG 4

FIG 5

S1 — | I1, I2, I3 |

S2 — | P*, a1, a2, a3 |

S3 — | U11*, U12*, U13*:<br>I1*·U1*+I2*·U2*+I3*·U3*=P* |

S4 — | i1*: i1*·u1=a1·P*<br>i2*: i2*·u2=a2·P*<br>i3*: i3*·u3=a3·P* |

S5 — | C |

S6 — | C → 4 |

TZ

FIG 6

$$T0 = 1/f0$$

$$TN = 1/fN$$

$$\frac{T0}{TZ} \geq 50$$

$$\frac{TN}{TZ} \geq 50$$

TZ

t

## FIG 7

S11 — $I1^*(I1); I2^*(I2); I3^*(I3)$

S12 — $\underline{I}^* = \dfrac{2}{3}\,[I1^* + I2^* \cdot \exp(2i\pi/3) + I3^* \cdot \exp(-2i\pi/3)]$

S13 — $\underline{RZ} = \exp(i\omega t)$

S14 — $U0^* = \dfrac{p^*}{\mathrm{Re}(\underline{RZ} \cdot \underline{Icc}^*)}$

S15 — $\underline{U}^* = U0^* \cdot \underline{RZ}$

S16 —
$U1^* = \mathrm{Re}[\underline{U}^*]$
$U2^* = \mathrm{Re}[\underline{U}^* \cdot \exp(-2i\pi/3)]$
$U3^* = \mathrm{Re}[\underline{U}^* \cdot \exp(2i\pi/3)]$

## FIG 8

## FIG 9

$$\underline{RZ} = \exp[2i\pi/3 \cdot INT(t/T)]$$ — S21

## FIG 10

T/3

2T/3

U1*

t

## FIG 11

$$\underline{RZ}: Ui^* =$$ — S22

**EUROPÄISCHER RECHERCHENBERICHT**

Europäisches Patentamt
European Patent Office
Office européen des brevets

Nummer der Anmeldung

EP 23 21 8774

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 3 124 903 A1 (DANIELI AUTOMATION SPA [IT]) 1. Februar 2017 (2017-02-01) | 1-6, 11-13 | INV. H02M7/483 H02M1/00 H05B7/148 F27B3/08 |
| Y | * Absätze [0043], [0047], [0049], [0052], [0065], [0066], [0069] - [0071], [0094], [0096]; Abbildungen 1,2 * | 7-10 | |
| | - - - - - | | |
| Y | VOLPINI ANDREA ET AL: "Negative Voltage Sequence Control for an Electric Arc Furnace Power Supply based on a Multilevel AC-AC Converter", 2023 IEEE ENERGY CONVERSION CONGRESS AND EXPOSITION (ECCE), IEEE, 29. Oktober 2023 (2023-10-29), Seiten 2817-2824, XP034508244, DOI: 10.1109/ECCE53617.2023.10361978 [gefunden am 2023-12-29] * Gleichungen 11-14, 19-22, 27, 28, 34; Abbildung 1 * | 7-10 | |
| | - - - - - | | |

**RECHERCHIERTE SACHGEBIETE (IPC)**

H02M
H05B
F27D
F27B

Der vorliegende Recherchenbericht wurde für alle Patentansprüche erstellt

| Recherchenort | Abschlußdatum der Recherche | Prüfer |
|---|---|---|
| Den Haag | 28. Mai 2024 | Kanelis, Konstantin |

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 23 21 8774

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

28-05-2024

| Im Recherchenbericht angeführtes Patentdokument | Datum der Veröffentlichung | Mitglied(er) der Patentfamilie | Datum der Veröffentlichung |
|---|---|---|---|
| EP 3124903 A1 | 01-02-2017 | AR 101962 A1 | 25-01-2017 |
| | | AU 2015227470 A1 | 16-02-2017 |
| | | BR 102015023945 A2 | 03-04-2018 |
| | | CA 2904967 A1 | 30-01-2017 |
| | | CN 106413167 A | 15-02-2017 |
| | | CN 113639564 A | 12-11-2021 |
| | | CN 114963781 A | 30-08-2022 |
| | | CN 114980397 A | 30-08-2022 |
| | | CY 1121620 T1 | 31-07-2020 |
| | | DK 3124903 T3 | 13-05-2019 |
| | | DK 3518622 T3 | 22-03-2021 |
| | | EP 3124903 A1 | 01-02-2017 |
| | | EP 3518622 A1 | 31-07-2019 |
| | | ES 2725911 T3 | 30-09-2019 |
| | | ES 2859698 T3 | 04-10-2021 |
| | | HR P20190858 T1 | 28-06-2019 |
| | | HR P20210416 T1 | 30-04-2021 |
| | | HU E043306 T2 | 28-08-2019 |
| | | HU E054041 T2 | 30-08-2021 |
| | | JP 6002823 B1 | 05-10-2016 |
| | | JP 2017033911 A | 09-02-2017 |
| | | KR 20170015045 A | 08-02-2017 |
| | | LT 3124903 T | 27-05-2019 |
| | | MA 40740 A | 01-02-2017 |
| | | MA 47024 A | 31-07-2019 |
| | | MX 354920 B | 26-03-2018 |
| | | MY 175365 A | 23-06-2020 |
| | | PL 3124903 T3 | 30-08-2019 |
| | | PL 3518622 T3 | 31-05-2021 |
| | | RU 2015139523 A | 22-03-2017 |
| | | SG 10201507755V A | 27-02-2017 |
| | | SI 3124903 T1 | 28-06-2019 |
| | | SI 3518622 T1 | 30-04-2021 |
| | | TR 201906577 T4 | 21-05-2019 |
| | | TW 201704707 A | 01-02-2017 |
| | | US 2017034878 A1 | 02-02-2017 |
| | | US 2019191502 A1 | 20-06-2019 |
| | | ZA 201506895 B | 29-03-2017 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2329684 B1